# EUROPEAN PATENT SPECIFICATION

(11) **EP 3 672 243 B1**
(45) Date of publication and mention of the grant of the patent: **26.03.2025**
(21) Application number: 18874338.9
(22) Date of filing: 31.08.2018
(51) Int. Cl.: H04N 19/85, H04N 19/59, H04N 19/17, H04N 19/136, H04N 19/124, H04N 19/105, H04N 19/182, G06N 99/00, G06T 5/00, G06N 3/02

(54) **METHOD AND DEVICE FOR ENCODING IMAGE ACCORDING TO LOW-QUALITY CODING MODE, AND METHOD AND DEVICE FOR DECODING IMAGE**
VERFAHREN UND VORRICHTUNG ZUR BILDCODIERUNG NACH EINEM NIEDERWERTIGEN CODIERUNGSMODUS SOWIE VERFAHREN UND VORRICHTUNG ZUR BILDDECODIERUNG
PROCÉDÉ ET DISPOSITIF DE CODAGE D'IMAGE SELON UN MODE DE CODAGE BASSE QUALITÉ, ET PROCÉDÉ ET DISPOSITIF DE DÉCODAGE D'IMAGE

(30) Priority: 02.11.2017 US 201762580684 P
(43) Date of publication of application: 24.06.2020
(73) Proprietor: Samsung Electronics Co., Ltd., Suwon-si, Gyeonggi-do 16677 (KR)
(72) Inventor: MIN, Jung-hye, Suwon-si Gyeonggi-do 16677 (KR); ALSHIN, Alexander, Suwon-si Gyeonggi-do 16677 (KR); ALSHIN, Eelena, Suwon-si Gyeonggi-do 16677 (KR)
(74) Representative: Appleyard Lees IP LLP
(86) International application number: PCT/KR2018/010126
(87) International publication number: WO 2019/088435

(56) References cited:
- EP-A1- 3 310 058
- WO-A1-2016/199330
- JP-A- 2017 092 801
- KR-A- 20150 013 741
- KR-B1- 101 381 600
- KR-B1- 101 715 150
- US-A1- 2008 152 243
- US-A1- 2009 180 552
- US-A1- 2009 322 778
- US-A1- 2011 019 910
- US-A1- 2017 256 033
- SLOT K ET AL: "Fast generation of natural textures with Cellular Neural Networks-based stitching", CELLULAR NANOSCALE NETWORKS AND THEIR APPLICATIONS (CNNA), 2010 12TH INTERNATIONAL WORKSHOP ON, IEEE, PISCATAWAY, NJ, USA, 3 February 2010 (2010-02-03), pages 1 - 4, XP031648291, ISBN: 978-1-4244-6679-5
- ANONYMOUS: "Overview of Scalable Video Coding", 84. MPEG MEETING;28-4-2008 - 2-5-2008; ARCHAMPS; (MOTION PICTURE EXPERT GROUP OR ISO/IEC JTC1/SC29/WG11),, no. N9792, 3 May 2008 (2008-05-03), XP030016286
- LEON A GATYS ET AL: "Texture Synthesis Using Convolutional Neural Networks", 27 May 2015 (2015-05-27), XP055430132, Retrieved from the Internet <URL:https://pdfs.semanticscholar.org/f54a/e5229960b828db7cd963150c8b8bc2684737.pdf> [retrieved on 20171129]

## Description

### TECHNICAL FIELD

The present disclosure relates to the field of encoding and decoding an image. More specifically, the present disclosure relates to a method and device for encoding an image according to a low-quality coding mode, and a method and device for decoding an image.

### BACKGROUND ART

In an image encoding and decoding method, one picture may be split into blocks and each of the blocks may be predictively encoded and predictively decoded by inter prediction or intra prediction.

Intra prediction is a method of compressing an image by removing spatial redundancy in a picture, and inter prediction is a method of compressing an image by removing temporal redundancy between pictures and a representative example thereof is motion estimation coding.

In motion estimation coding, blocks of a current picture are predicted using at least one reference picture. A certain evaluation function may be used to search for a reference block most similar to a current block in a certain search range.

In intra prediction and inter prediction, a current block is predicted, based on an adjacent pixel or a reference block, and a block predicted as a result of predicting the current block is subtracted from the current block to generate and encode a residual block.

In codecs such as H.264 Advanced Video Coding (AVC) and High-Efficiency Video Coding (HEVC), a motion vector of either previously encoded blocks adjacent to a current block or blocks included in a previously coded picture is used as a prediction motion vector of the current block to predict a motion vector of the current block for inter prediction. A differential motion vector, which is the difference between the motion vector of the current block and the prediction motion vector, is signaled to a decoder side in a certain manner.

WO 2016/199330 A1 discloses an image coding method, an image decoding method, an image coding device and an image decoding device. Slot K et al: "Fast generation of natural textures with Cellular Neural Networks-based stitching", Cellular Nanoscale Networks and Their Applications (CNNA), 2010 12th International Workshop on, IEEE, Piscataway, NJ, USA, 3 February 2010, pages 1-4, ISBN: 978-1-4244-6679-5 presents a novel method for texture synthesis. US 2011/019910 A1 discloses an image processing system. Anonymous: "Overview of Scalable Video Coding", 84. MPEG Meeting; 28-4-2008 - 2-5-2008, Archamps; (Motion Picture Expert Group or ISO/IEC JTC1/SC29/WG11), no. N9792, 3 May 2008 presents an overview of SVC. US 2008/152243 A1 describes image encoding and decoding method and apparatus using texture synthesis. US 2009/322778 A1 describes a system and method for encoding and decoding using texture replacement.

### DESCRIPTION OF EMBODIMENTS

### TECHNICAL PROBLEM

The invention is defined as in the appended claims.

### BRIEF DESCRIPTION OF THE DRAWINGS

FIG. 1 is a diagram illustrating an image with a texture region.
FIG. 2 is a diagram illustrating an encoding process and a decoding process according to an embodiment.
FIG. 3 is a flowchart of an image decoding method according to an embodiment.
FIG. 4 is a diagram illustrating a target region and a reference region of an image.
FIG. 5 is a diagram illustrating an image which includes a reconstructed reference region and a reconstructed target region.
FIG. 6 is a diagram illustrating a structure of a machine learning model.
FIG. 7 is a block diagram illustrating a configuration of an image decoding device according to an embodiment.
FIG. 8 is a flowchart of an image encoding method according to an unclaimed example.
FIG. 9 is a block diagram illustrating a configuration of an image encoding device according to an unclaimed example.
FIG. 10 is a diagram illustrating an original image, FIG. 11 is a diagram illustrating an image with a down-sampled target region, FIG. 12 is a diagram illustrating an image which includes a reconstructed reference region and a reconstructed and post-processed target region, and FIG. 13 is a diagram illustrating a finally reconstructed image.
FIG. 14 is a block diagram of an image encoding and decoding system according to an unclaimed example.
FIG. 15 is a diagram illustrating an original image and a low-quality image according to an embodiment.

### BEST MODE

According to an aspect of the present disclosure, a method of decoding an image includes determining at least one reference region to be referenced by a target region in the image to which a low-quality coding mode is applied; extracting a certain type of information from the determined at least one reference region; and
changing pixel values of the target region, based on the extracted type of information.

In one embodiment, the type of information may include a certain type of reference texture feature, and the changing of the pixel values of the target region may include changing the pixel values of the target region such that a type of target texture feature of the target region is the same as or similar to the reference texture feature.

In one embodiment, the changing of the pixel values of the target region may include changing the pixel values of the target region by applying the target region and the at least one reference region to a machine learning model.

In one embodiment, the method may further include reconstructing the target region encoded at low quality, based on information obtained from a bitstream, before changing the pixel values of the target region.

In one embodiment, the method may further include post-processing the reconstructed target region before changing the pixel values of the target region.

In one embodiment, the post-processing of the reconstructed target region may include post-processing the reconstructed target region by at least one of up-sampling or high-pass filtering

In one embodiment, the reconstructing of the target region may include reconstructing the reference region by obtaining, from the bitstream, information generated as a result of encoding a reference region included in an original image; and reconstructing the target region by obtaining, from the bitstream, information generated as a result of encoding a target region included in a low-quality image corresponding to the original image.

In one embodiment, the method may further include, when the determined at least one reference region includes a plurality of reference regions, identifying types of reference texture features to be extracted from the plurality of reference regions, the extracting of the certain type of information may include extracting the identified types of reference texture features from the plurality of reference regions, and the changing of the pixel values of the target region may include changing the pixel values of the target region such that target texture features of the target region corresponding to the identified types of reference texture features are the same as or similar to the extracted reference texture features.

According to another aspect of the present disclosure, a method of encoding an image includes
determining at least one reference region to be referenced by a target region in a first image to which a low-quality coding mode is to be applied; encoding the target region at low quality; and generating a bitstream to include information generated as a result of encoding the target region and information indicating the at least one reference region.

In one embodiment, the encoding of the target region at low quality may include pre-processing the target region of the first image, based on at least one of down-sampling, low-pass filtering, or pixel-value filtering; and encoding the pre-processed target region according to at least one of an intra mode, an inter mode, a skip mode, or a merge mode

In one embodiment, the encoding of the target region at low quality may include encoding the target region according to at least one of an intra mode, an inter mode, or a merge mode, based on a quantization parameter larger than a quantization parameter of regions other than the target region and the reference region of the first image.

In one embodiment, the encoding of the target region at low quality may include obtaining a second image of lower quality than the quality of the first image; determining a region in the second image corresponding to the target region of the first image; and encoding the determined region of the second image.

In one embodiment, the method may further include encoding the at least one reference region at high quality, and the generating of the bitstream may include generating the bitstream to additionally include information generated as a result of encoding the at least one reference region and information related to the encoding of the at least one reference region at high quality.

According to another aspect of the present disclosure, an image decoding device includes
a processor; and a memory storing at least one instruction, wherein the processor is configured to execute the at least one instruction to: determine at least one reference region to be referenced by a target region in an image to which a low-quality coding mode is applied; extract a certain type of information from the determined at least one reference region; and change pixel values of the target region, based on the extracted type of information.

According to another aspect of the present disclosure, an image encoding device includes
a processor; and a memory storing at least one instruction, wherein the processor is configured to execute the at least one instruction to: determine at least one reference region to be referenced by a target region in a first image to which a low-quality coding mode is to be applied; encode the target region at low quality; and generate a bitstream to include information generated as a result of encoding the target region and information indicating the at least one reference region.

### MODE OF DISCLOSURE

In the following description of embodiments, the related art is not described in detail when it is determined that it would obscure the disclosure due to unnecessary detail. Numerals (e.g., first, second, etc.) used to describe embodiments are merely identification symbols for distinguishing one component from other components.

In the present specification, it will be understood that when one component is referred to as being "coupled to" or "connected to" another component, the component may be directly coupled or connected to the other component but may be connected or connected to the other component via another component therebetween unless specifically described otherwise.

Two or more of components referred to as '~ unit', 'module', or the like may be merged into one component or one of them may be divided into two or more sub-components according to a function. Each of components to be described below may additionally perform some or all of functions of another component, as well as a main function thereof, and some of main functions of each of the components are may be performed exclusively by another component.

As used herein, the term 'image' or 'picture' may refer to a still image of a video or a moving picture, i.e., a video itself.

In addition, the term 'low-quality coding mode' may refer to a coding method of performing encoding at low quality in terms of an encoding side, and a coding method applied to a region which is reconstructed and in which texture changing is performed by referring to at least one reference region, in terms of a decoding side.

Hereinafter, embodiments according to the present disclosure will be described in detail.

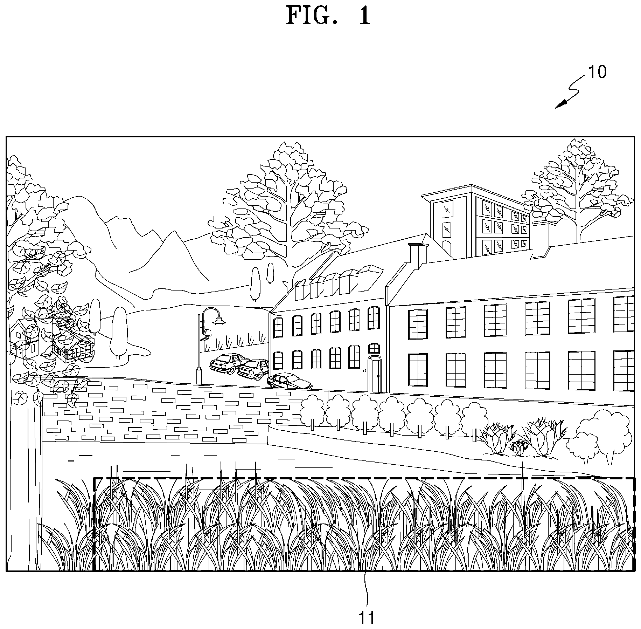

FIG. 1 is a diagram illustrating an image 10 with a texture region 11.

In general, the image 10 may include the texture region 11 in which the amount of change in a pixel value is not uniform spatially. As used herein, the texture region 11 may refer to a region in which a degree of change in pixel values of pixels is large and random, and a large number of bits are generated when the image 10 is encoded by a general encoding method.

As illustrated in FIG. 1, the image 10 may include the texture region 11 which is a forested region. When the texture region 11 is encoded according to an existing codec, e.g., H.264 AVC or HEVC, a large number of bits should be used.

According to codecs such as the H.264 AVC and HEVC, a bit rate is reduced by removing temporal redundancy and spatial redundancy, but there are limitations in reducing the bit rate of the texture region 11 and thus a method of effectively encoding and decoding the texture region 11 is required.

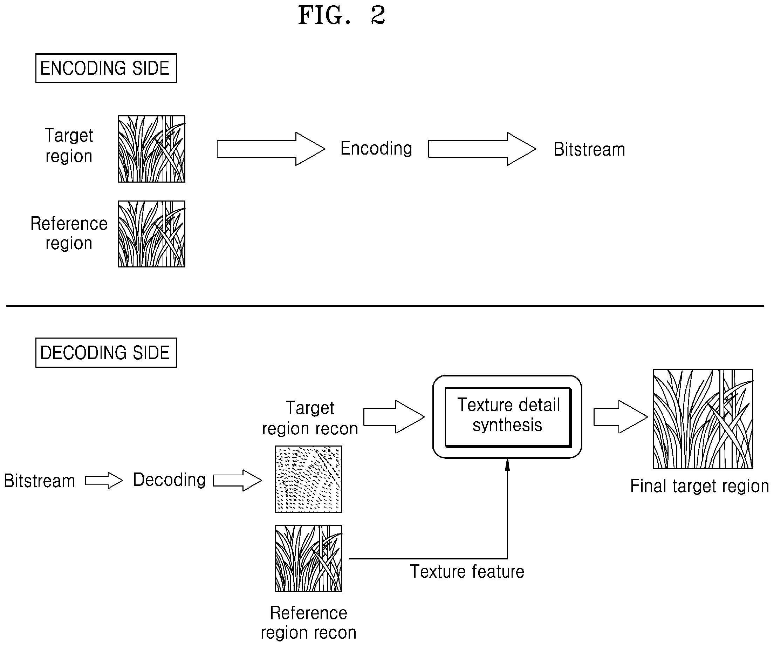

FIG. 2 is a diagram illustrating an encoding process and a decoding process according to an embodiment.

An encoding process and a decoding process according to an embodiment will be described with reference to FIG. 2 below. A target region and a reference region which are included in an image are encoded by an encoding side to generate a bitstream including encoded data. The target region may be encoded at low quality. When regions of the image except the target region and the reference region are encoded with normal quality, low-quality encoding may refer to encoding with lower quality than normal quality, and conversely, high-quality encoding may refer to encoding with higher quality than normal quality. In one embodiment, the reference region may be encoded with normal quality or high quality.

A decoding side receives a bitstream and restores the target region and the reference region, based on the bitstream. Because the target region is encoded at low quality, an image quality of the reconstructed target region is worse than that of the target region included in an original image. Certain information is extracted from the reconstructed reference region and the reconstructed target region is changed according to the extracted information. For example, when this information includes a certain texture feature, pixel values of the reconstructed target region may be changed such that a texture feature of the reconstructed target region may be the same as or similar to the texture feature extracted from the reconstructed reference region. As the pixel values are changed, a final target region that is almost the same as the target region of the original image may be generated. The certain information may include various types of information obtainable from the regions of the image.

In one embodiment, because the target region which may cause a large number of bits when encoded with normal quality may be encoded at low quality, the number of bits could be reduced. Furthermore, the reconstructed target region may be changed based on the information extracted from the reference region to be substantially the same as the original image, the quality of a finally reconstructed image could be increased.

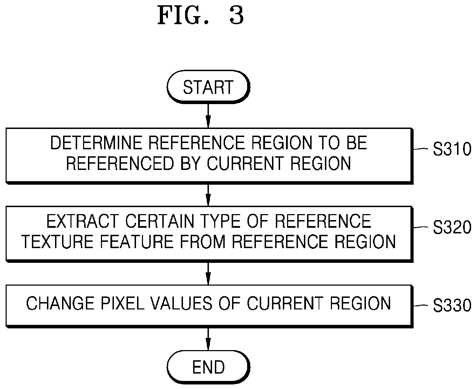

Image decoding and encoding according to an embodiment will be described in detail with reference to FIG. 3 below.

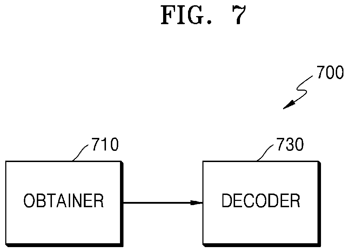

FIG. 3 is a flowchart of a method of decoding an image according to an embodiment. Operations of the method of FIG. 3 may be performed by an image decoding device 700 described with reference to FIG. 7 below.

In operation S310, the image decoding device 700 determines a reference region to be referenced by a current region of an image to which a low-quality coding mode is applied.

Here, the current region refers to a certain region of the image, which is to be decoded. As in a codec such as HEVC, the image decoding device 700 may split the image into block units such as largest coding units, coding units, prediction units, transform units, or the like, and the current region may correspond to at least one largest coding unit, at least one coding unit, at least one prediction unit, or at least one transform unit.

As described above, because a target region of the image is encoded at low quality by an encoding device, the image decoding device 700 may identify whether the current region that is a current decoding target corresponds to the target region to which a low-quality coding mode is applied.

The image decoding device 700 may determine target regions and reference regions included in the image and a reference region to be referenced by each of the target regions by extracting, from a bitstream, information about at least one of positions of the target regions in the image, sizes of the target regions, positions of the reference regions, sizes of the reference region, or the reference region to be referenced by each of the target regions.

When the image is split into blocks, the image decoding device 700 may identify whether each of the blocks corresponds to a target region, a reference region, or another region, based on the information obtained from the bitstream. For example, when a first block and a second block are located in the image, the image decoding device 700 may obtain information about the first block from the bitstream and determine that the first block corresponds to a reference region, and obtain information regarding the second block and determine that the second block is a target region and the first block is to be referenced by the second block.

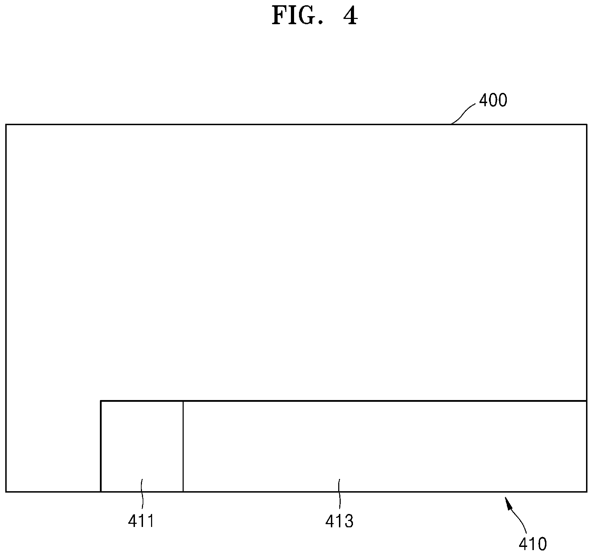

Referring to FIG. 4, the image decoding device 700 may specify, in an image 400, a position and size of a reference region 411 and a position and size of a target region 413. The reference region 411 and the target region 413 may be included in a texture region 410.

In one embodiment, when the low-quality coding mode is not applied to a current region, the image decoding device 700 may reconstruct the current region in a general manner. For example, the image decoding device 700 may identify a coding mode of the current region and reconstruct the current region according to at least one of an intra mode, an inter mode, a merge mode, or a skip mode.

Referring back to FIG. 3, in operation S320, when the current region corresponds to a target region and a reference region of the image referenced by the current region is identified, the image decoding device 700 extracts a certain type of reference texture feature from the reference region referenced by the current region.

The reference texture feature may refer to at least one texture feature that is a reference for changing a texture feature of the target region among texture features extractable from the reference region.

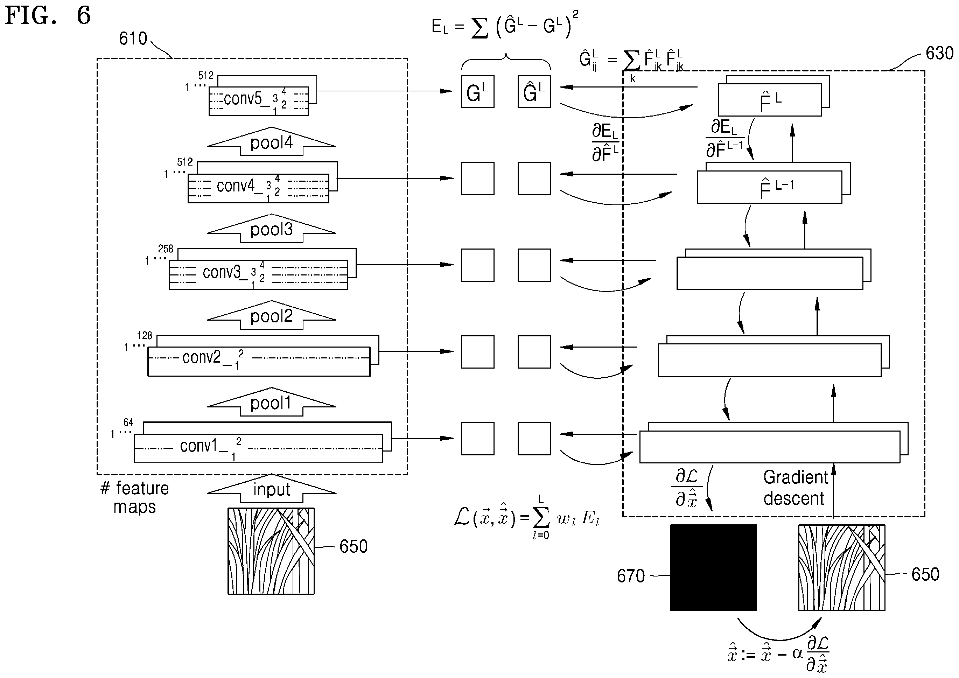

The texture features extractable from the reference region may include, for example, statistic values of the intensity of an image (e.g., a mean, a variance, a 3rd order moment, a 4th order moment, statistics from a histogram, second order statistics representing a relationship between each pixel pairs, higher order statistics, a gray level co-occurrence matrix, etc.), a color distribution, a gradient histogram, gradient statistics, transform coefficients in a frequency domain, parameters for distributions (e.g., the type of distributions, etc.), texture features extracted based on a neural network model, and the like, but are not limited thereto and may include various types of information extractable from the reference region. Here, the texture feature extracted based on the neural network model will be described with reference to FIG. 6 below.

The image decoding device 700 may extract a predetermined type of reference texture feature from the reference region or may identify the type of reference texture feature to be extracted from the bitstream and then extract the identified type of reference texture feature from the region.

In operation S330, the image decoding device 700 changes pixel values of the current region such that the predetermined type of target texture feature may be the same as or similar to the reference texture feature.

In one embodiment, the image decoding device 700 may obtain, from the bitstream, information on which unit the pixel values of the current region should be changed. For example, the image decoding device 700 may obtain, from the bitstream, information on which unit, from among a coding unit, a prediction unit, or a transform unit, the pixel values of the current region should be changed, and change the pixel values of the current region for each of the units determined from the obtained information.

When the type of the reference texture feature is a texture feature extracted from the neural network model, the image decoding device 700 may change the pixel values of the current region such that a texture feature of the current region extracted from the neural network model is the same as or similar to the reference texture feature.

The image decoding device 700 may apply the current region and the reference region to a machine learning model to change the pixel values of the current region such that the target texture feature is the same as or similar to the reference texture feature. The machine learning model may include, for example, a convolutional neural network (CNN). Changing a texture feature of one image according to a texture feature of another image by applying the two images to the CNN is disclosed in "Texture Synthesis Using Convolutional Neural Networks, NIPS 2015", introduced in the present specification.

In one embodiment, the image decoding device 700 may reconstruct the current region, based on information obtained from the bitstream (e.g., information related to a residual of the current region) before changing the pixel values of the current region, and thereafter change the pixel values of the constructed current region. As described above, the current region may be encoded at low quality by an encoding side and thus an image quality of the current region reconstructed by the image decoding device 700 may be lower than that of a current region included in the original image.

In one embodiment, regions of an image other than a target region may be encoded in the original image, and the target region may be encoded in a low-quality image. The image decoding device 700 may reconstruct the reference region by obtaining, from the bitstream, information generated as a result of encoding the reference region in the original image, and reconstruct the current region by obtaining, from the bitstream, information generated as a result of encoding the target region in the low-quality image. Post-processing described below may further be applied to the reconstructed current region.

The image decoding device 700 may check the bitstream to identify a coding mode applied to the current region and reconstruct the current region according to the identified coding mode. Here, the coding mode may include, for example, at least one of an inter mode, an intra mode, a merge mode, or a skip mode. The inter mode, the intra mode, the merge mode, and the skip mode are encoding/decoding tools used in codecs such as HEVC and thus a detailed description thereof will be omitted herein.

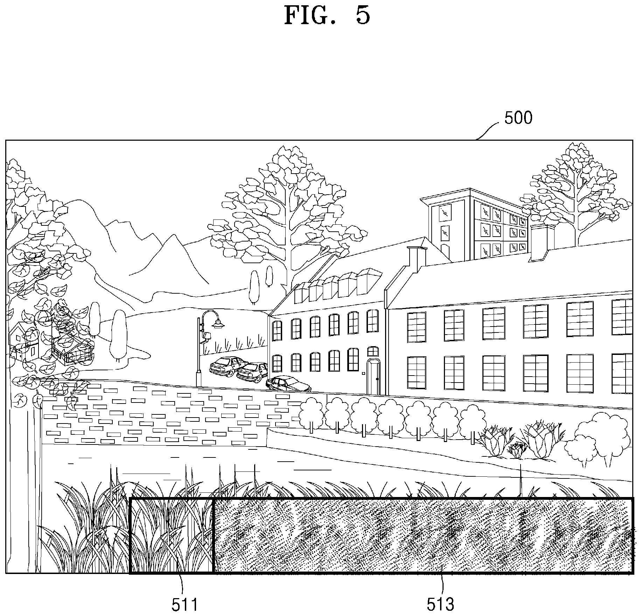

FIG. 5 is a diagram illustrating an image 500 which includes a reconstructed reference region 511 and a reconstructed target region 513. The reconstructed target region 513 of FIG. 5 is reconstructed after being encoded at low quality and thus an image quality thereof is worse than that of the reference region 511.

In one embodiment, the image decoding device 700 may post-process a reconstructed current region before changing pixel values of a current region. For example, the image decoding device 700 may post-process the reconstructed current region by at least one of up-sampling or high-pass filtering. Up-sampling may refer to a process of increasing the number of pixels of the restored current region, and high-pass filtering may refer to a process of improving high-frequency characteristics of the restored current region.

When an encoding side has performed at least one preprocessing of down-sampling or low-pass filtering on the current region before encoding the current region or has encoded a current region included in a low-quality image, the image decoding device 700 may post-process the reconstructed the reconstructed current region. In this case, the image decoding device 700 may obtain information about a processing method applied to the current region from a bitstream.

For example, when it is identified that down-sampling has been applied to the current region, the image decoding device 700 may up-sample a reconstructed current region (here, the reconstructed current region has a down-sampled size) according to information about a size of an original current region obtained from the bitstream. In one embodiment, the bitstream may further include location information of the down-sampled current region of the image. The down-sampling of the current region means that an original size of the current region is reduced and thus an image encoding device 900 may include, in the bitstream, information about a position of the current region having the reduced size. The image decoding device 700 may obtain encoded data of the down-sampled current region of the image by referring to the location information of the down-sampled current region, reconstruct the current region, based on the obtained encoded data, and up-sample the reconstructed current region.

For example, when it is determined that low-pass filtering has been applied to the current region, the image decoding device 700 may identify that low-pass filtering has been applied to the current region, based on the bitstream, and perform high-pass filtering on the reconstructed current image.

In one embodiment, both high-pass filtering and up-sampling may be applied to post-process the reconstructed current region.

In one embodiment, when the current region is encoded in a low-quality image and the low-quality image is obtained by applying at least one of down-sampling or low-pass filtering to an original image, the image decoding device 700 may apply at least one of up-sampling or high-pass filtering to the reconstructed current region.

In one unclaimed example, as described below, low-quality encoding may include skipping encoding of a target region. In this case, the image decoding device 700 cannot obtain the encoded data of the current region from the bitstream and thus a process of reconstructing the current region may be skipped, and may change a texture feature of the current region. In other words, when encoding of the current region is skipped, the image decoding device 700 may skip a reconstruction process according to the inter mode, the intra mode, the merge mode, the skip mode or the like for the current region, allocate predetermined pixel values to pixels of the current region, and apply the current region and a reference region to a machine learning model, thereby changing pixel values of the pixels in the current region.

In one embodiment, when it is determined that the reference region has been encoded at high quality, the image decoding device 700 may reconstruct the reference region at high quality, based on obtained information regarding the reference region from bitstream (e.g., data generated by encoding the reference region and information about a high-quality encoding method of the reference region). An example of high-quality encoding/decoding may include applying a small quantization parameter, as described later. The reference region may be encoded and decoded before encoding and decoding a target region.

In one embodiment, a plurality of reference regions may be referenced by one target region. In this case, the image decoding device 700 may identify the type of reference texture feature to be extracted from each of a plurality of reference regions referenced by the current region (i.e., the target region), based on the bitstream. In addition, the image decoding device 700 may extract the identified reference texture feature from each of the plurality of reference regions. The image decoding device 700 may change pixel values of the current region such that each of the target texture features of the current region may be the same as or similar to one of the extracted reference texture features. For example, it is assumed that reference regions referenced by the target region include a first reference region and a second reference region, the type of reference texture feature to be extracted from the first reference region is an A texture feature, and the type of reference texture feature to be extracted from the second reference region is a B texture feature. In this case, the image decoding device 700 may change pixel values of the target region such that an A texture feature of the target region may be the same as or similar to the A texture feature extracted from the first reference region and a B texture feature of the target region may be the same as or similar to the B texture feature extracted from the second reference region.

In one embodiment, one reference region may be referenced by each of a plurality of target regions. In this case, the type of reference texture feature to be extracted from one reference region for each of the plurality of target regions may be individually determined for each of the plurality of target regions. For example, an A texture feature may be extracted from a certain reference region for the first target region, and a B texture feature may be extracted from the same reference region for the second target region. The image decoding device 700 may change pixel values of the first target region such that the A texture feature of the first target region may be the same as or similar to the A texture feature of the reference region and change pixel values of the second target region such that the B texture feature of the second target region may be the same as or similar to the B texture feature of the same reference region.

FIG. 6 is a diagram illustrating a structure of a machine learning model.

The machine learning model illustrated in FIG. 6 is discussed in 'Texture Synthesis Using Convolutional Neural Networks, NIPS 2015' and may include a first CNN 610 for extracting a texture feature and a second CNN 630 for changing a texture feature of a target region 670. The first CNN 610 may extract, as a texture feature, a GRAM matrix corresponding to a correlation between filter responses of layers. The first CNN 610 may correspond to a Visual Geometry Group (VGG) network model. A reference region 650 is input to the first CNN 610 to extract a texture feature of the reference region 650. The target region 670 and the reference region 650 are input to the second CNN 630 to change pixel values of the target region 670 such that a texture feature of the target region 670 may be the same as or similar to that of the reference region 650. In detail, the second CNN 630 may be trained to minimize the distance between the texture feature of the target region 670 and the texture feature of the reference region 650 and thus may change the texture feature of the target region 670 when the target region 670 and the reference region 650 are input thereto.

FIG. 7 is a block diagram illustrating a configuration of an image decoding device 700 according to an embodiment.

Referring to FIG. 7, the image decoding device 700 may include an obtainer 710 and a decoder 730. The obtainer 710 and the decoder 730 may be embodied as a processor, and the processor may be operated according to at least one instruction stored in a memory (not shown).

The image decoding device 700 may further include at least one data storage (not shown) in which data input to or output from the obtainer 710 and the decoder 730 is stored. The image decoding device 700 may include a memory controller (not shown) that controls inputting of data to and outputting data from the at least one data storage unit.

The image decoding device 700 may perform an image decoding operation, including prediction, through an internal or external video decoding processor to reconstruct an image through image decoding.

The obtainer 710 receives a bitstream. The received bitstream may include at least one of information about a target region included an image (e.g., location information, size information, etc. of the target region), information regarding a reference region (e.g., location information, size information, etc. of the reference region), information about a reference region referenced by each target region, information about the type of a reference texture feature to be extracted from each reference region, information about low-quality encoding method of each target region, or information about a high-quality encoding method of each reference region.

The decoder 730 decodes an image, based on the information included in the bitstream. The decoder 730 may reconstruct regions of the image other than a target region by a general decoding method, e.g., at least one of the intra mode, the inter mode, the skip mode, or the merge mode.

The decoder 730 may decode the target region in a low-quality decoding mode. In detail, the decoder 730 determines a reference region referenced by the target region in the image, and extracts a certain type of reference texture feature from the reference region.

The decoder 730 may reconstruct the target region according to at least one of the intra mode, the inter mode, the merge mode, or the skip mode, based on the information included in the bitstream, and change pixel values of the reconstructed target region such that a certain type of target texture feature of the reconstructed target region may be the same as or similar to the reference texture feature.

In one embodiment, the decoder 730 may post-process the reconstructed target region. Here, the post-processing of the reconstructed target region may refer to processing the target region by at least one of high-pass filtering or up-sampling.

In one unclaimed example, when encoding of the target region has been skipped by the image encoding device 900, the image decoding device 700 may skip a reconstruction process according to at least one of the intra mode, the inter mode, the merge mode, or the skip mode and change the pixel values of the target region such that the target texture feature of the target region may be the same as or similar to the reference texture feature.

In one embodiment, the decoder 730 may input the target region and the reference region into a machine learning model to change the pixel values of the target region. Here, the machine learning model may include a CNN but is not limited thereto.

When a plurality of reference regions are referenced by the target region, the decoder 730 may identify the types of reference texture features to be extracted from the plurality of reference regions and extract the identified types of reference texture features from the plurality of reference regions. In addition, the decoder 730 may change the pixel values of the target region such that target texture features of the target region corresponding to the identified types of reference texture features may be the same as or similar to the extracted reference texture features.

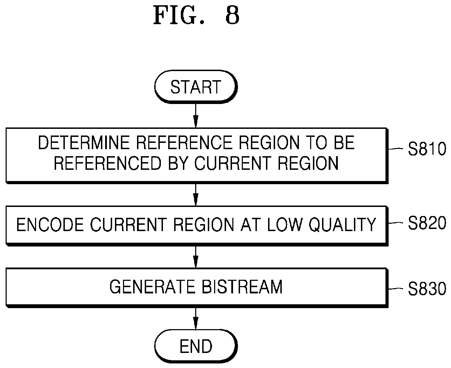

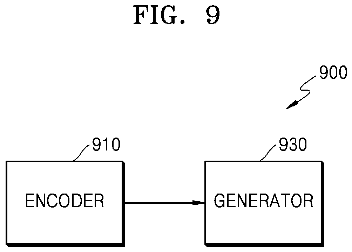

FIG. 8 is a flowchart of a method of encoding an image according to an unclaimed example. Operations of the method of FIG. 8 may be performed by the mage encoding device 900 to be described with reference to FIG. 9 below.

In operation S810, the image encoding device 900 determines a reference region to be referenced by a current region corresponding to a target region to which the low-quality coding mode is to be applied.

Here, the current region refers to a region of an image that is to be currently encoded. The image encoding device 900 may split the image into block units such as largest coding units, coding units, prediction units, transform units, or the like, and the current region may correspond to at least one largest coding unit, at least one coding unit, at least one prediction unit, or at least one transform unit.

In one unclaimed example, the image encoding device 900 may determine a texture region in the image to be encoded and determine at least one reference region and at least one target region in the texture region. The image encoding device 900 may determine the texture region in the image, in consideration of characteristics of the image, for example, pixel values, an intensity variance, an edge direction, an edge distribution, etc. in the image. The texture region may refer to a region having similar characteristics, i.e., similar texture features.

When the texture region is determined in the image, the image encoding device 900 determine at least one reference region and at least one target region in the texture region. The image encoding device 900 may determine a reference region and a target region in a texture region according to a predetermined criterion. For example, the image encoding device 900 may determine an uppermost and leftmost region having a certain size of the texture region as a reference region and determine the other regions as target regions. For example, the image encoding device 900 may split the texture region of the image into a plurality of regions in consideration of features of the texture region and select at least one reference region and at least one from among the plurality of regions.

When the at least one reference region and the at least one target region are determined in the texture region, for each of the at least one target region, the image encoding device 900 may determine a reference region to referenced and the type of reference texture feature to be extracted from each of the at least one reference region. The image encoding device 900 may determine at least one texture feature among a plurality of texture features extractable from a reference region as a reference texture feature for the target region.

In one unclaimed example, when one reference region is determined in the texture region, the determined reference region may be automatically determined to be referenced by a target region in the texture region.

In one unclaimed example, the type of reference texture feature to be extracted from the reference region may be predetermined.

In operation S820, the image encoding device 900 may encode the current region corresponding to the target region at low quality.

The image encoding device 900 may encode the current region by one of various low-quality encoding methods. Low-quality encoding methods available will be described below.

As one example, the image encoding device 900 may pre-process the current region in the image and thereafter encode the pre-processed current region according to at least one of the inter mode, the intra mode, the merge mode, or the skip mode. The pre-processing of the current region may include, for example, processing the current region, based on at least one of down-sampling, low-pass filtering, or pixel-value filtering.

Down-sampling may refer to a process of reducing the number of pixels included in an original current region, and low-pass filtering may refer to a process of reducing high-frequency characteristics included in the current region. In addition, pixel-value filtering may refer to a process of excluding, from encoding targets, pixels other than pixels having a predetermined value among pixel values of the current region, or setting the pixels other than the pixels having the predetermined value to a default value, e.g., zero. For example, only pixels having a certain pixel value among the pixel values may be encoded. When the pre-processed current region is encoded according to a certain coding mode, the number of bits may be lower than when a non-pre-processed current region is encoded.

When the image encoding device 900 down-samples the current region and then encodes the down-sampled current region, the image encoding device 900 may include, in a bitstream, information about a position of encoded data of the down-sampled current region in the image and size information of the current region that has not been down-sampled. When the image encoding device 900 low-pass filters the current region and then encodes the low-pass filtered current region, the image encoding device 900 may include, in the bitstream, information indicating that the current region has been low-pass filtered.

As another example, the image encoding device 900 may apply, to the current region, prediction based on at least one of the inter mode, the intra mode, or the merge mode and frequency transformation, and quantize residual data, which is generated by the application of the prediction and the frequency transformation, with a quantization parameter of a certain value. The quantization parameter of the certain value may be a value larger than a quantization parameter value applied to regions other than the reference region and the target region in the image. By quantizing the residual data with a large quantization parameter, the number of bits included in the bitstream may be reduced.

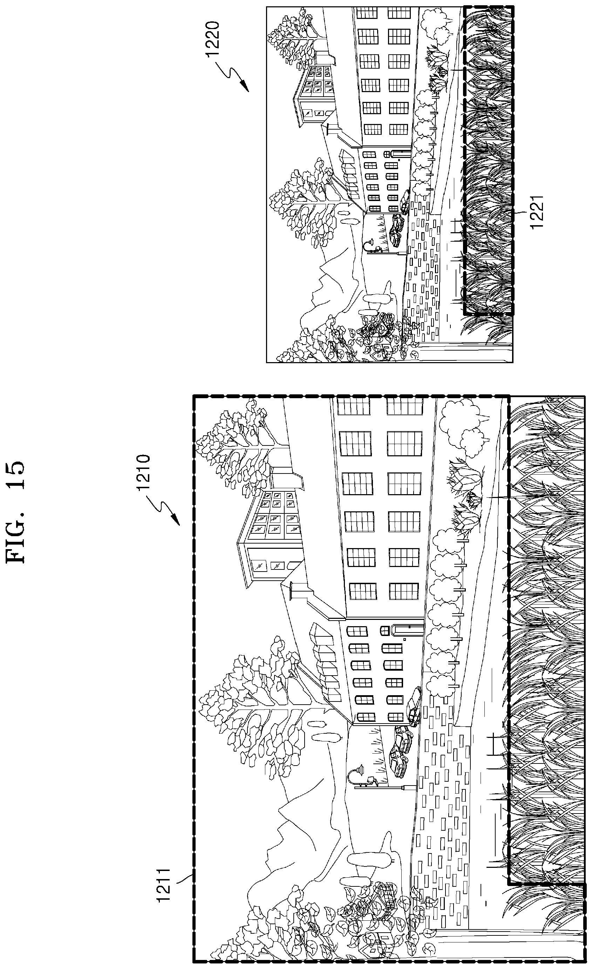

As another example, the image encoding device 900 may obtain a low-quality image by applying at least one of down-sampling and low-pass filtering to an original image to be encoded, and determine a region in the low-quality image corresponding to a target region of the original image. In addition, the image encoding device 900 may encode the region determined in the low-quality image. That is, the image encoding device 900 may encode regions other than the target region, based on the original image, and encode a region corresponding to the target region, based on the low-quality image. For example, as illustrated in FIG. 15, the image encoding device 900 may down-sample an original image 1210 to generate a low-quality image 1220, encode a region 1221 corresponding to a target region, based on the low-quality image 1220, and encode a region 1211 other than the target region, based on the original image 1210.

As another example, the image encoding device 900 may skip encoding of the current region according to the inter mode, the intra mode, the merge mode, and the skip mode, and include, in a bitstream, information indicating that the encoding of the current region has been skipped.

In operation S830, the image encoding device 900 may generate a bitstream which includes at least one of information generated by encoding the current region, information indicating a reference region to be referenced by the current region, information indicating whether pre-processing has been applied to the current region, information indicating whether the current region has been encoded, based on the low-quality image, or information indicating a generation method of the low-quality image. When only one reference region is determined in the texture region, information about a reference region to be referenced by each target region may not be included in the bitstream, but when a plurality of reference regions are determined in the texture region, the image encoding device 900 may further include information about a reference region to be referenced by each target region in the bitstream.

In addition, the image encoding device 900 may further include, in the bitstream, information about a low-quality encoding method of each target region and information about the type of reference texture feature to be extracted from the reference region.

The image encoding device 900 may encode the reference region according to a general coding mode, similar to other general regions, but in one embodiment, the image encoding device 900 may encode the reference region at high quality. The reference region is a region referenced by the target region and thus may be decoded with higher image quality than other general regions.

As one example, the image encoding device 900 may encode the reference region with a value of a quantization parameter smaller than a quantization parameter applied to regions of the image other than the reference region and the target region. Specifically, the image encoding device 900 may apply, to the reference region, prediction based on at least one of the inter mode, the intra mode, or the merge mode, and frequency transformation, and quantize residual data, which is generated by the application of the prediction and the frequency transformation, with a quantization parameter of a certain value smaller than a quantization parameter used in the other regions. In this case, the image encoding device 900 may generate a bitstream further including information indicating that the reference region has been encoded at high quality and information about the quantization parameter applied to the reference region.

Because a general encoding device includes a function of a decoding device, the image encoding device 900 according to an unclaimed example, may also include some functions of the image decoding device 700. In detail, the image encoding device 900 may reconstruct a target region encoded at low quality by inversely quantizing, inversely transforming, and predictively reconstructing encoded data according to the low-quality coding mode of the target region, e.g., quantized frequency coefficients generated by encoding the target region at low quality. In addition, the image encoding device 900 may change pixel values of the reconstructed target region such that a target texture feature of the reconstructed target region may be the same as or similar to a reference texture feature of the reference region reconstructed in advance. In one unclaimed example, deblocking filtering, sample adaptive offset (SAO) filtering, or the like may be performed on a resultant final target region.

FIG. 9 is a block diagram illustrating a configuration of the image encoding device 900 according to an unclaimed example.

Referring to FIG. 9, the image encoding device 900 may include an encoder 910 and a generator 930. The encoder 910 and the generator 930 may be implemented as a processor, and the processor may perform an encoding operation based on at least one instruction stored in a memory (not shown).

In one unclaimed example, the image encoding device 900 may include at least one data storage (not shown) in which data input to or output from the encoder 910 and the generator 930 is stored. The image encoding device 900 may include a memory controller (not shown) that controls inputting of data to or outputting of data from the at least one data storage unit,

The image encoding device 900 may perform an image encoding operation, including prediction, through an internal or external video encoding processor.

The encoder 910 encodes an image, and the generator 930 generates a bitstream which includes data generated as a result of encoding the image and various parameter information.

The encoder 910 may determine a texture region in the image, and determine a reference region and a target region in the texture region.

When the current region corresponds to a target region, the encoder 910 determines a reference region to be referenced by the current region, and the generator 930 generates a bitstream which includes information about the determined reference region, i.e., location information of the reference region. The image decoding device 700 may specify a reference region to be referenced by the current region corresponding to the target region, based on the location information included in the bitstream.

In addition, the encoder 910 encodes the current region at low quality, and the generator 930 generates a bitstream which includes information generated as a result of encoding the current region.

In one unclaimed example, when the low-quality coding mode is not applied to the current region, the encoder 910 may encode the current region by a general encoding method, e.g., at least one of the intra mode, the inter mode, the merge mode, or the skip mode.

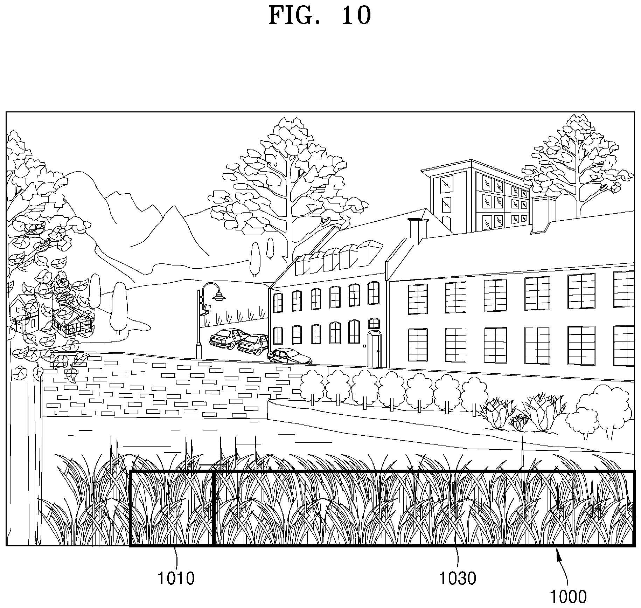

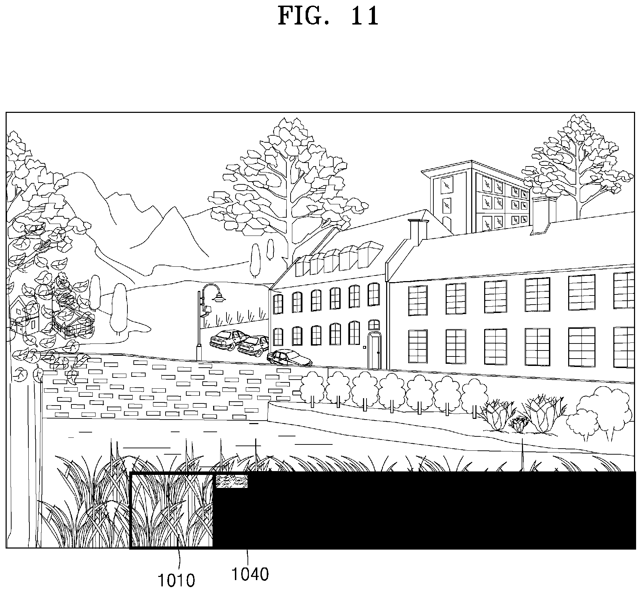

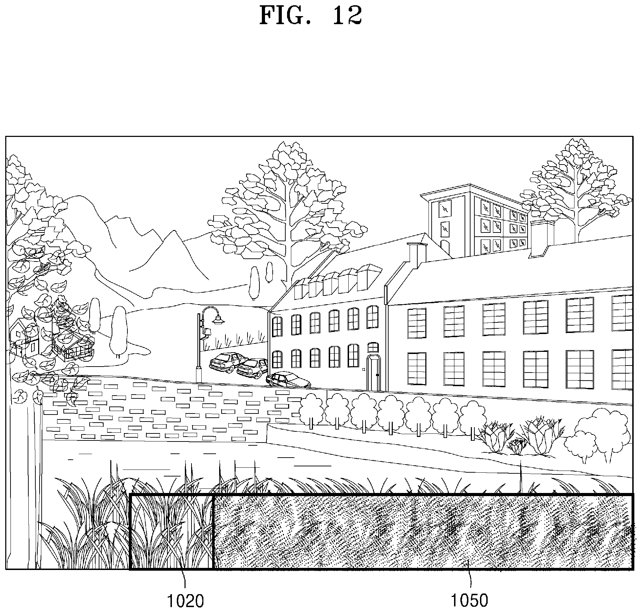

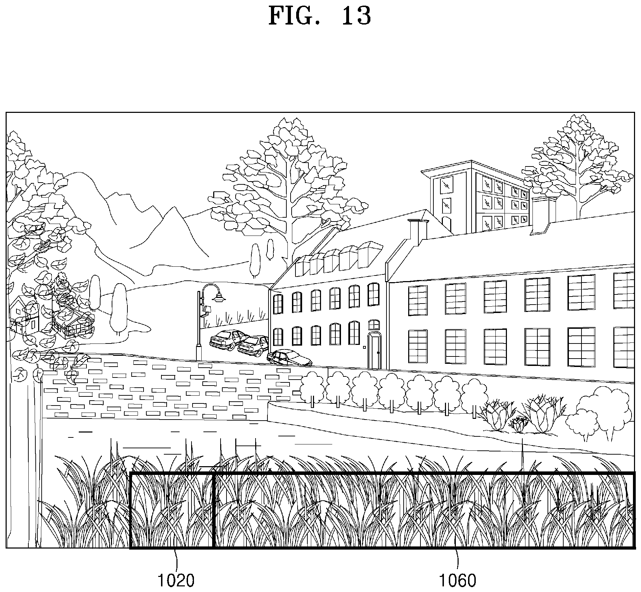

FIG. 10 is a diagram illustrating an original image. FIG. 11 is a diagram illustrating an image with a down-sampled target region. FIG. 12 is a diagram illustrating an image which includes a reconstructed reference region and a reconstructed and up-sampled target region. FIG. 13 is a diagram illustrating a finally reconstructed image.

As illustrated in FIG. 10, the image encoding device 900 may determine a texture region 1000 in an original image, and determine a reference region 1010 and a target region 1030 within the texture region 1000. Referring to FIG. 11, the image encoding device 900 may down-sample the target region 1030 to generate a down-sampled target region 1040, and encode the down-sampled target region 1040.

Referring to FIG. 12, the image decoding device 700 may reconstruct the reference region 1010 to generate a reconstructed reference region 1020, and reconstruct the target region 1040 pre-processed by an encoding side and up-sample the target region 1040 to generate an up-sampled target region 1050.

Next, referring to FIG. 13, the image decoding device 700 may generate a final target region 1060 by changing pixel values of the up-sampled target region 1050, based on a reference texture feature of the reconstructed reference region 1020.

A comparison between FIG. 12 and FIG. 13 reveals that an image quality of the final target region 1060 is much better than that of the up-sampled target region 1050.

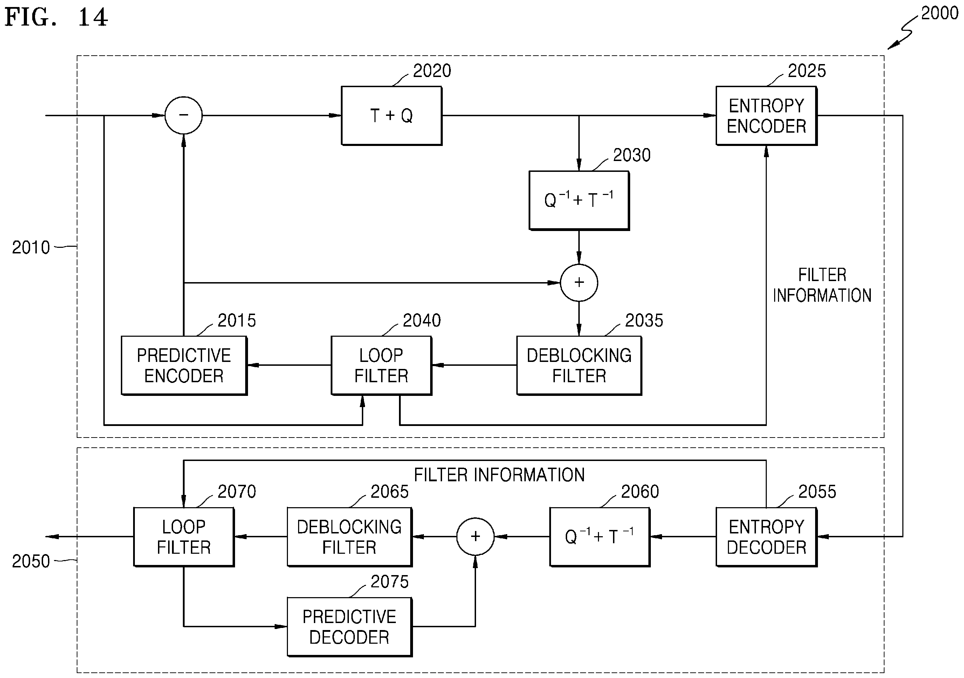

FIG. 14 is a block diagram of an image encoding and decoding system according to an unclaimed example.

An encoding terminal 2010 of the image encoding and decoding system 2000 transmits a bitstream which includes encoded data of an image, and a decoding terminal 2050 thereof receives and decodes the bitstream and outputs a reconstructed image. In this case, the encoding terminal 2010 may have a configuration similar to that of the image encoding device 900 described above, and the decoding terminal 2050 may have a configuration similar to that of the image decoding device 700.

In the encoding terminal 2010, a predictive encoder 2015 outputs an image predicted by inter prediction and intra prediction, and a transform and quantization unit 2020 transforms and quantizes residual data between the predicted image and an input current image, and outputs quantized transform coefficients. In addition, the predictive encoder 2015 may encode a region, to which the low-quality coding mode is to be applied, at low quality. An entropy encoder 2025 encodes the quantized transform coefficient and outputs a result of encoding in the form of a bitstream. The quantized transform coefficient is reconstructed to spatial-domain data through an inverse quantization and inverse transform unit 2030, and the reconstructed spatial-domain data is output as a reconstructed image through a deblocking filter 2035 and a loop filter 2040. The reconstructed image may be used as a reference image for a next input image through the predictive encoder 2015.

In one embodiment, the predictive encoder 2015 and the transform and quantization unit 2020 of the encoder terminal 2010 may correspond to the encoder 910 of the image encoding device 900, and the entropy encoder 2025 may correspond to the generator 930 of the image encoding device 900.

The encoded data of the image in the bitstream, which is received by the decoding terminal 2050, is reconstructed as spatial-domain residual data through an entropy decoder 2055 and an inverse quantization and inverse transform unit 2060. The predicted image which are output from a predictive decoder 2075 and the residual data may be combined together to form spatial-domain image data, and a deblocking filter 2065 and a loop filter 2070 may filter the spatial-domain image data and output a reconstructed image of a current original image. The reconstructed image may be used as a reference image for a next original image by the predictive decoder 2075.

In one embodiment, the entropy decoder 2055 of the decoding terminal 2050 may correspond to the obtainer 710 of the image decoding device 700, and the inverse quantization and inverse transform unit 2060 and the predictive decoder 2075 may correspond to the decoder 730. The predictive decoder 2075 may reconstruct a region encoded at low quality and change a texture feature of the reconstructed region.

The loop filter 2040 of the encoding terminal 2010 performs loop filtering using filter information input according to a user input or system setting. The filter information used by the loop filter 2040 is output to the entropy encoder 2025 and the entropy encoder 2025 transmits the filter information to the decoding terminal 2050, together with the encoded image data. The loop filter 2070 of the decoding terminal 2050 may perform loop filtering, based on the filter information input from the decoding terminal 2050.

The above-described embodiments of the present disclosure may be written as a program executable in a computer, and the program may be stored in a medium.

The medium may continuously store a computer executable program or temporarily store the computer executable program to execute or download it. Examples of the medium may include various types of recording means or storage means, each of which may be a single hardware device or a combination of several hardware devices, are not limited to media directly connected to a computer system and may be distributed in a network. Examples of the medium include magnetic media such as hard disks, floppy disks and magnetic tapes, optical recording media such as CD-ROMs and DVDs, magneto-optical media such as floptical disks, ROM, RAM, flash memory, and the like, and may be configured to store program instructions. Examples of the medium may further include recording media or storage media managed by an application store that distributes applications, sites that supply or distribute various types of software, servers, or the like.

## Claims

1. A method of decoding an image, the method comprising:
reconstructing a target region and at least one reference region in the image based on information obtained from a bitstream, wherein the target region is encoded after applying at least one of down-sampling or low-pass filtering to the target region, and the at least one reference region is encoded at normal quality or high quality;
determining (S310) the at least one reference region to be referenced by the target region;
extracting (S320) a reference texture feature from the determined at least one reference region by inputting the at least one reference region to a first convolutional neural network, CNN, configured to extract texture features;
post-processing the target region by applying at least one of up-sampling or high-pass filtering to the target region, and
changing (S330) pixel values of the post-processed target region based on the reference texture feature by applying the target region and the at least one reference region to a second CNN trained to minimize distance between a texture feature of the target region and the reference texture feature of the at least one reference region,
wherein a texture region is determined in the image in consideration of characteristics of the image including pixel values, the texture region being a region having similar texture features,
wherein the texture region of the image is split into a plurality of regions in consideration of features of the texture region, and the target region and the at least one reference region selected from among the plurality of regions.

2. The method of claim 1, wherein the reconstructing of the target region comprises:
reconstructing the at least one reference region by obtaining, from the bitstream, information generated as a result of encoding a reference region included in an original image; and
reconstructing the target region by obtaining, from the bitstream, information generated as a result of encoding the target region included in a low-quality image corresponding to the original image.

3. The method of claim 1, further comprising, when the determined at least one reference region includes a plurality of reference regions, identifying types of reference texture features to be extracted from the plurality of reference regions, and
wherein the extracting of the reference texture feature comprises extracting the identified types of reference texture features from the plurality of reference regions.

4. An image decoding device (700) comprising:
a processor; and
a memory storing at least one instruction,
wherein the processor is configured to execute the at least one instruction to:
reconstruct a target region and at least one reference region in the image based on information obtained from a bitstream, wherein the target region is encoded after applying at least one of down-sampling or low-pass filtering to the target region, and the at least one reference region is encoded at normal quality or high quality;
determine the at least one reference region to be referenced by the target region;
extract a reference texture feature from the determined at least one reference region by inputting the at least one reference region to a first convolutional neural network, CNN, configured to extract texture features;
post-process the target region by applying at least one of up-sampling or high-pass filtering to the target region, and
change pixel values of the post-processed target region based on the reference texture feature by applying the target region and the at least one reference region to a second CNN trained to minimize distance between a texture feature of the target region and the reference texture feature of the at least one reference region,
wherein a texture region is determined in the image in consideration of characteristics of the image including pixel values, the texture region being a region having similar texture features,
wherein the texture region of the image is split into a plurality of regions in consideration of features of the texture region, and the target region and the at least one reference region are selected from among the plurality of regions.

## Patentansprüche

1. Verfahren zum Decodieren eines Bildes, wobei das Verfahren umfasst:
Rekonstruieren eines Zielbereichs und mindestens eines Referenzbereichs in dem Bild basierend auf Informationen, die aus einem Bitstrom erhalten werden, wobei der Zielbereich nach Anwendung von mindestens einem von Downsampling oder Tiefpassfilterung auf den Zielbereich codiert wird und der mindestens eine Referenzbereich mit normaler Qualität oder hoher Qualität codiert wird;
Bestimmen (S310) des mindestens einen Referenzbereichs, auf den durch den Zielbereich verwiesen werden soll;
Extrahieren (S320) eines Referenztexturmerkmals aus dem bestimmten mindestens einen Referenzbereich durch Eingeben des mindestens einen Referenzbereichs in ein erstes faltendes neuronales Netzwerk, (Convolutional Neural Network - CNN), das konfiguriert ist, dass es Texturmerkmale extrahiert;
Nachbearbeiten des Zielbereichs durch Anwenden von mindestens Upsampling oder Hochpassfilterung auf den Zielbereich, und
Ändern (S330) von Pixelwerten des nachbearbeiteten Zielbereichs basierend auf dem Referenztexturmerkmal durch Anwenden des Zielbereichs und des mindestens einen Referenzbereichs auf ein zweites CNN, das trainiert ist, den Abstand zwischen einem Texturmerkmal des Zielbereichs und dem Referenztexturmerkmal des mindestens einen Referenzbereichs zu minimieren,
wobei ein Texturbereich in dem Bild unter Berücksichtigung von Eigenschaften des Bildes einschließlich Pixelwerten bestimmt wird, wobei der Texturbereich ein Bereich mit ähnlichen Texturmerkmalen ist,
wobei der Texturbereich des Bildes unter Berücksichtigung von Merkmalen des Texturbereichs in eine Vielzahl von Bereichen aufgeteilt wird und der Zielbereich und der mindestens eine Referenzbereich aus der Vielzahl von Bereichen ausgewählt werden.

2. Verfahren nach Anspruch 1, wobei das Rekonstruieren des Zielbereichs umfasst:
Rekonstruieren des mindestens einen Referenzbereichs durch Erhalten, aus dem Bitstrom, von Informationen, die als ein Ergebnis des Codierens eines Referenzbereichs, der in einem Originalbild enthalten ist, erzeugt werden; und
Rekonstruieren des Zielbereichs durch Erhalten, aus dem Bitstrom, von Informationen, die als ein Ergebnis von Codieren des Zielbereichs, der in einem Bild geringer Qualität enthalten ist, das dem Originalbild entspricht, erzeugt werden.

3. Verfahren nach Anspruch 1, ferner umfassend, wenn der bestimmte mindestens eine Referenzbereich mehrere Referenzbereiche enthält, Identifizieren von Typen von Referenztexturmerkmalen, die aus der Vielzahl von Referenzbereichen zu extrahieren sind, und
wobei das Extrahieren des Referenztexturmerkmals das Extrahieren der identifizierten Typen von Referenztexturmerkmalen aus der Vielzahl von Referenzbereichen umfasst.

4. Bilddecodierungsvorrichtung (700), umfassend:
einen Prozessor; und
einen Speicher, der mindestens eine Anweisung speichert, wobei der Prozessor konfiguriert ist, dass er die mindestens eine folgende Anweisung ausführt:
Rekonstruieren eines Zielbereichs und mindestens eines Referenzbereichs in dem Bild basierend auf Informationen, die aus einem Bitstrom erhalten werden, wobei der Zielbereich nach Anwendung von mindestens Downsampling oder Tiefpassfilterung auf den Zielbereich codiert wird und der mindestens eine Referenzbereich mit normaler Qualität oder hoher Qualität codiert wird;
Bestimmen des mindestens einen Referenzbereichs, auf den durch den Zielbereich verwiesen werden soll;
Extrahieren eines Referenztexturmerkmals aus dem bestimmten mindestens einen Referenzbereich durch Eingeben des mindestens einen Referenzbereichs in ein erstes faltendes neuronales Netzwerk (CNN), das konfiguriert ist, dass es Texturmerkmale extrahiert;
Nachbearbeiten des Zielbereichs durch Anwenden von mindestens Upsampling oder Hochpassfilterung auf den Zielbereich, und
Ändern der Pixelwerte des nachbearbeiteten Zielbereichs basierend auf dem Referenztexturmerkmal durch Anwenden des Zielbereichs und des mindestens einen Referenzbereichs auf ein zweites CNN, das trainiert ist, den Abstand zwischen einem Texturmerkmal des Zielbereichs und dem Referenztexturmerkmal des mindestens einen Referenzbereichs zu minimieren,
wobei ein Texturbereich in dem Bild unter Berücksichtigung von Eigenschaften des Bildes einschließlich Pixelwerten bestimmt wird, wobei der Texturbereich ein Bereich mit ähnlichen Texturmerkmalen ist,
wobei der Texturbereich des Bildes unter Berücksichtigung von Merkmalen des Texturbereichs in eine Vielzahl von Bereichen aufgeteilt wird und der Zielbereich und der mindestens eine Referenzbereich aus der Vielzahl von Bereichen ausgewählt werden.

## Revendications

1. Procédé de décodage d'une image, le procédé comprenant :
la reconstruction d'une zone cible et d'au moins une zone de référence dans l'image sur la base d'informations obtenues à partir d'un flux binaire, ladite zone cible étant codée après l'application d'au moins l'un d'un sous-échantillonnage ou d'un filtrage passe-bas à la zone cible, et ladite au moins une zone de référence étant codée à une qualité normale ou à une haute qualité ;
la détermination (S310) de l'au moins une zone de référence qui doit être référencée par la zone cible ;
l'extraction (S320) d'une caractéristique de texture de référence à partir de la au moins une zone de référence déterminée en entrant la au moins une zone de référence dans un premier réseau neuronal convolutif, CNN, configuré pour extraire des caractéristiques de texture ; le post-traitement de la zone cible en appliquant au moins l'un d'un sur-échantillonnage ou d'un filtrage passe-haut à la zone cible, et
la modification (S330) de valeurs de pixels de la zone cible post-traitée sur la base de la caractéristique de texture de référence en appliquant la zone cible et l'au moins une zone de référence à un second CNN formé pour minimiser la distance entre une caractéristique de texture de la zone cible et la caractéristique de texture de référence de l'au moins une zone de référence,
une zone de texture étant déterminée dans l'image en tenant compte des attributs de l'image comprenant des valeurs de pixel, la zone de texture étant une zone comportant des caractéristiques de texture similaires,
ladite zone de texture de l'image étant divisée en une pluralité de zones en tenant compte des caractéristiques de la zone de texture, et ladite zone cible et ladite au moins une zone de référence étant sélectionnées parmi la pluralité de zones.

2. Procédé de la revendication 1, ladite reconstruction de la zone cible comprenant :
la reconstruction de l'au moins une zone de référence en obtenant, à partir du flux binaire, des informations générées à la suite du codage d'une zone de référence comprise dans une image originale ; et
la reconstruction de la zone cible en obtenant, à partir du flux binaire, des informations générées à la suite du codage de la zone cible comprise dans une image de faible qualité correspondant à l'image originale.

3. Procédé de la revendication 1, comprenant en outre, lorsque ladite au moins une zone de référence déterminée comprend une pluralité de zones de référence, l'identification de types de caractéristiques de texture de référence à extraire de la pluralité de zones de référence, et
ladite extraction de la caractéristique de texture de référence comprenant l'extraction des types identifiés de caractéristiques de texture de référence à partir de la pluralité de zones de référence.

4. Dispositif de décodage d'image (700) comprenant :
un processeur ; et
une mémoire stockant au moins une instruction,
ledit processeur étant en outre configuré pour exécuter la au moins une instruction pour :
reconstruire une zone cible et d'au moins une zone de référence dans l'image sur la base d'informations obtenues à partir d'un flux binaire, ladite zone cible étant codée après l'application d'au moins l'un d'un sous-échantillonnage ou d'un filtrage passe-bas à la zone cible, et ladite au moins une zone de référence étant codée à une qualité normale ou à une haute qualité ;
déterminer la au moins une zone de référence qui doit être référencée par la zone cible ;
extraire une caractéristique de texture de référence à partir de la au moins une zone de référence déterminée en entrant la au moins une zone de référence dans un premier réseau neuronal convolutif, CNN, configuré pour extraire des caractéristiques de texture ;
post-traiter la zone cible en appliquant au moins l'un d'un sur-échantillonnage ou d'un filtrage passe-haut à la zone cible, et
modifier des valeurs de pixels de la zone cible post-traitée sur la base de la caractéristique de texture de référence en appliquant la zone cible et l'au moins une zone de référence à un second CNN formé pour minimiser la distance entre une caractéristique de texture de la zone cible et la caractéristique de texture de référence de l'au moins une zone de référence,
une zone de texture étant déterminée dans l'image en tenant compte des attributs de l'image comprenant des valeurs de pixel, la zone de texture étant une zone comportant des caractéristiques de texture similaires,
ladite zone de texture de l'image étant divisée en une pluralité de zones en tenant compte des caractéristiques de la zone de texture, et ladite zone cible et ladite au moins une zone de référence étant sélectionnées parmi la pluralité de zones.
